(19) **Europäisches Patentamt European Patent Office Office européen des brevets**

(11) **EP 4 648 173 A1**

(12) **EUROPEAN PATENT APPLICATION**
published in accordance with Art. 153(4) EPC

(43) Date of publication:
**12.11.2025 Bulletin 2025/46**

(21) Application number: 24880183.9

(22) Date of filing: **18.10.2024**

(51) International Patent Classification (IPC):
*H01M 10/42* (2006.01)    *H01M 4/13* (2010.01)
*H01M 4/139* (2010.01)    *H01M 4/62* (2006.01)
*C09D 109/06* (2006.01)    *C09D 7/61* (2018.01)
*C09D 7/20* (2018.01)    *C09D 7/45* (2018.01)
*C08L 27/16* (2006.01)    *C08K 3/22* (2006.01)

(52) Cooperative Patent Classification (CPC):
**C08K 3/22; C08K 5/1545; C08L 27/16; C09D 7/20; C09D 7/45; C09D 7/61; C09D 109/06; H01M 4/04; H01M 4/13; H01M 4/139; H01M 4/62; H01M 10/42; Y02E 60/10**

(86) International application number:
**PCT/KR2024/015876**

(87) International publication number:
**WO 2025/084846 (24.04.2025 Gazette 2025/17)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **18.10.2023 KR 20230139255**

(71) Applicant: **LG Energy Solution, Ltd.**
**Seoul 07335 (KR)**

(72) Inventors:
• **CHOI, Ye Rim**
**Daejeon 34122 (KR)**
• **KIM, Dong Hyun**
**Daejeon 34122 (KR)**
• **CHO, Hyung Suk**
**Daejeon 34122 (KR)**
• **MOON, Il Jae**
**Daejeon 34122 (KR)**

(74) Representative: **Plasseraud IP**
**104 Rue de Richelieu**
**CS92104**
**75080 Paris Cedex 02 (FR)**

(54) **COMPOSITION FOR ELECTRODE INSULATION COATING, ELECTRODE, AND METHOD FOR MANUFACTURING ELECTRODE**

(57) A composition for insulating coating according to the present disclosure includes inorganic particles; a rubber-based binder; a fluorine-based binder; a dispersant; and a solvent, wherein the fluorine-based binder is included in an amount of 7 parts by weight or less with respect to 100 parts by weight of solid content excluding the solvent.

The composition for insulating coating according to the present disclosure when applied to the current collector, has a thicker wet thickness, thereby suppressing the sliding phenomenon in which the slurry for electrode flows down, and has the effect of significantly reducing the sliding length of the electrode active material layer.

[FIG. 1]

**Description**

[Technical Field]

This application claims the benefit of priority based on Korean Patent Application No. 10-2023-0139255, filed on October 18, 2023, and the entire contents of the Korean patent application are incorporated herein by reference.
The present disclosure relates to a composition for electrode insulating coating for reducing the sliding length of an electrode active material layer, a manufacturing method of an electrode using the same, and an electrode.

[Background]

Recently, as technological development and demand for mobile devices has increased, the demand for batteries as an energy source has increased rapidly, and accordingly, research has been conducted on batteries that can meet various demands. In particular, as a power source of such devices, lithium secondary batteries having high energy density and excellent lifespan and cycle characteristics are being actively researched.
A lithium secondary battery includes a positive electrode comprising a positive electrode active material capable of lithium-ion intercalation/deintercalation, a negative electrode comprising a negative electrode active material capable of lithium-ion intercalation/deintercalation, a separator interposed between the positive electrode and the negative electrode, and an electrolyte. The positive and negative electrodes have a structure in which an electrode active material layer is formed on one surface or both surfaces of an electrode current collector, and recently, a technology of forming an insulating layer on the outer portion of the electrode active material layer has been developed to improve electrode stability. By forming the insulating layer on the outer portion of the electrode active material layer, the electrode active material layer can be protected from heat generated during driving of the electrode, and insulating properties between electrodes can be increased.
Meanwhile, when the slurry for electrode is coated on the current collector, due to the fluid characteristics of the slurry for electrode, the end of the electrode active material layer does not fall vertically with respect to the current collector plane, but includes a sliding region inclined with respect to the current collector plane. As the demand for high energy density batteries increases, technical attempts have been made to reduce such sliding length.
Patent Document 1 discloses a composition for electrode insulating coating comprising ceramic and styrene-butadiene rubber. However, when forming an insulating layer using such composition for electrode insulating coating, since the wet-thickness of the composition for insulating coating was not sufficiently thick, the reduction level of the sliding length of the electrode active material layer was still not satisfactory.
(Patent Document 1) Korean Patent Application Publication No. 10-2023-0012439

[Summary]

[Technical Problem]

The present disclosure is directed to providing a composition for insulating coating capable of reducing the sliding length of an electrode active material layer, an electrode manufacturing method using the same, and an electrode.

[Technical Solution]

According to one embodiment of the present disclosure, a composition for insulating coating is provided. The composition for insulating coating includes inorganic particles; a rubber-based binder; a fluorine-based binder; a dispersant; and a solvent, wherein the fluorine-based binder is included in an amount of 7 parts by weight or less with respect to 100 parts by weight of solid content excluding the solvent.
In one embodiment, the fluorine-based binder is included from 2 parts by weight to 6 parts by weight with respect to 100 parts by weight of solid content excluding the solvent.
The composition for insulating coating according to one embodiment, has a viscosity of 2,500 cps or more, as measured at a shear rate of 2.5/s at 25°C.
The composition for insulating coating according to one embodiment, wherein at 1 Hz, the phase angle a before shear is 1° to 9°. Here, the shear rate of the shear is in a range of 0.001/s to 1,000/s.
The composition for insulating coating according to one embodiment, wherein at 1 Hz, the phase angle b after shear is 2° to 10°. Here, the shear rate of the shear is in the range of 0.001/s to 1,000/s.
The composition for insulating coating according to one embodiment, wherein the value of the phase angle change rate calculated according to the following formula 1 is 20% or less.

Phase angle change rate (%) = {(phase angle at 1 Hz after shear - phase angle at 1 Hz before shear)/ phase angle at 1 Hz before shear} × 100 [Formula 1]

In formula 1 above, the shear rate of the shear is in the range of 0.001/s to 1,000/s.

In one embodiment, the fluorine-based binder is a PVDF-based polymer comprising vinylidene fluoride (VDF) as a monomer.

In one embodiment, the rubber-based binder is a styrene-butadiene rubber (SBR).

In one embodiment, the dispersant is one type or two or more types selected from the group consisting of tannic acid, baicalin, luteolin, taxifolin, myricetin, quercetin, rutin, catechin, epigallocatechin gallate, butein, and piceatannol.

In one embodiment, the dispersant is tannic acid.

In one embodiment, the inorganic particles are one type or two or more types selected from the group consisting of $AlO(OH)$, $Al_2O_3$, $\gamma$-$AlOOH$, $Al(OH)_3$, $SiO_2$, $TiO_2$, $SnO_2$, $CeO_2$, $MgO$, $NiO$, $CaO$, $ZnO$, $ZrO_2$, $Y_2O_3$, $SrTiO_3$, $BaTiO_3$, and $Mg(OH)_2$.

In one embodiment, with respect to 100 parts by weight of solid content excluding the solvent, wherein the inorganic particles are included from 51 parts by weight to 85 parts by weight; the rubber-based binder is included from 15 parts by weight to 37 parts by weight; and the dispersant is included from 0.3 parts by weight to 5 parts by weight.

In one embodiment, the rubber-based binder is 65 parts by weight or less with respect to 100 parts by weight of the inorganic particles.

In one embodiment, the composition for insulating coating has solid content excluding the solvent of 16 wt.% or more.

In one embodiment, the total weight of the rubber-based binder and the fluorine-based binder, based on the total weight of solid content, is in the range of 20 wt.% to 45 wt.%.

In one embodiment, the solvent is one type or two or more types selected from the group consisting of acetone, tetrahydrofuran, acetonitrile, dimethylformamide, dimethylsulfoxide, dimethylacetamide, and N-Methyl-2-Pyrrolidone (NMP).

According to another embodiment of the present disclosure, an electrode manufacturing method is provided. The electrode manufacturing method includes: a process of applying a slurry for electrode on a current collector; and a process of applying a composition for electrode insulating coating on the current collector, wherein the composition for electrode insulating coating includes: inorganic particles; a rubber-based binder; a fluorine-based binder; a dispersant; and a solvent, wherein the fluorine-based binder is included in an amount of 7 parts by weight or less with respect to 100 parts by weight of solid content excluding the solvent.

In one embodiment, in the process of coating the composition for insulating coating, the composition for insulating coating is applied to one side edge or both side edges of the slurry for electrode, based on the transverse direction (TD) of the current collector, but is applied so as to overlap with a portion of the transverse direction end of the slurry for electrode.

In one embodiment, the process of coating the composition for insulating coating is performed simultaneously with the process of coating the slurry for electrode, or is performed after the application of the slurry for electrode, while the slurry for electrode is not dried.

According to another embodiment of the present disclosure, an electrode is provided. The electrode includes an electrode current collector; an electrode active material layer disposed on one side or both sides of the electrode current collector; and an insulating layer disposed on one side or both sides of the electrode current collector, wherein the insulating layer, contacting a transverse direction (TD) end of the electrode active material layer, includes an inorganic particle; a rubber-based binder; a fluorine-based binder; and a dispersant, wherein the fluorine-based binder comprises 7 parts by weight or less with respect to 100 parts by weight of the insulating layer.

In one embodiment, the electrode active material layer is divided into a flattened region, the surface of which is parallel to the plane of the current collector, and a sliding region extending from the flattened region, the surface of which is inclined to the plane of the current collector, and the insulating layer contacts the inclined surface of the sliding region.

In one embodiment, the sliding region has an overall length direction length of 2.5 mm or less.

In one embodiment, the insulating layer has a maximum value of a thickness thereof of 15 μm or more, and an overall length direction length thereof of 5 mm or less.

[Advantageous Effects]

The composition for insulating coating according to the present disclosure when applied to the current collector, has a thicker wet thickness, thereby suppressing the sliding phenomenon in which the slurry for electrode flows down, and has the effect of significantly reducing the sliding length of the electrode active material layer.

The composition for insulating coating according to the present disclosure has excellent coating properties even when the solid content is increased, and has the effect of improving the drying speed of the electrode as the solvent is reduced.

The composition for insulating coating according to the present disclosure has excellent adhesion even after an impregnation of an electrolyte, which prevents detachment of the insulating layer.

The electrode manufactured according to the present disclosure can maintain excellent insulating performance in high temperature conditions, safety is further improved by including an insulating layer with excellent adhesion, and the sliding length of the electrode active material layer is reduced, thereby providing a high capacity/high energy density battery.

[Brief Description of the Drawings]

FIG. 1 is an enlarged view of a portion of one side of a cross-sectional view of an electrode coated with a slurry for electrode and a composition for electrode insulating coating according to exemplary embodiments.
FIG. 2 is a top view of an electrode sheet to describe an electrode according to exemplary embodiments.
FIG. 3 is a cross-sectional view cut along A-A' of FIG. 2.

[Description of Reference Numerals]

100: electrode
110: current collector
120: electrode active material layer
130: insulating layer
120SE: slurry for electrode
130CD: composition for insulating coating

[Detailed Description]

Hereinafter, the present disclosure will be described in more detail to provide a better understanding of the present disclosure.

Terms and words used in the present specification and claims should not be construed as limited to general or dictionary terms and should be interpreted with the meaning and concept in accordance with the technical idea of the present disclosure based on the principle that the inventors have appropriately defined the concepts of terms in order to explain the invention in the best way.

The terms used in this specification are used only to describe exemplary embodiments and are not intended to limit the present disclosure. Singular expressions include plural expressions unless otherwise clearly indicated by the context.

In this specification, terms such as "include," "comprise," or "have" should be understood to specify the presence of features, numbers, steps, components, or combinations thereof that have been implemented, and should not be construed as excluding the presence or possibility of addition of one or more other features, numbers, steps, components, or combinations thereof.

In this specification, the term "combinations thereof" included in a Markush-type expression means one or more mixtures or combinations selected from the group consisting of components listed in the Markush-type expression, which means including one or more selected from the group consisting of the components.

In this specification, the indication "A and/or B" means "A or B or both."

In this specification, "%" means wt.% unless explicitly indicated otherwise.

In this specification, the machine direction (MD) of the electrode sheet and the overall width direction of the electrode are defined as the X-axis direction, the traverse direction (TD) of the electrode sheet and the overall length direction of the electrode are defined as the Y-axis direction, and the direction perpendicular to the plane by the combination of the X-axis direction and the Y-axis direction is defined as the Z-axis direction, and the X-axis direction and the Y-axis direction are referred to as the horizontal direction.

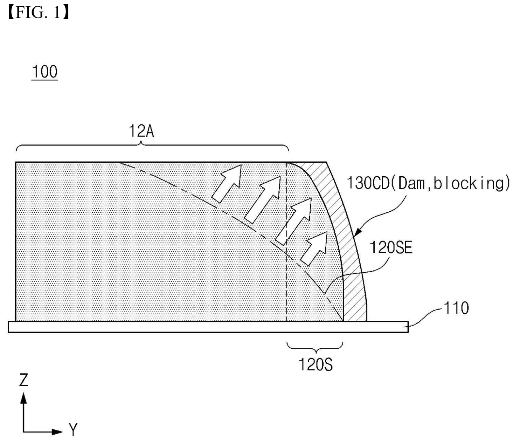

In the present specification, the sliding region refers to a region in the electrode active material layer that forms an inclined surface with respect to the plane of the electrode current collector (refer to 120S in FIG. 1). Also, the length of the sliding region refers to the length in the Y direction of the sliding region.

**Composition for electrode insulating coating**

The composition for electrode insulating coating includes inorganic particles; a rubber-based binder; a fluorine-based binder; a dispersant; and a solvent, wherein the fluorine-based binder is included in an amount of 7 parts by weight or less with respect to 100 parts by weight of solid content excluding the solvent.

According to the present disclosure, the shear viscosity of the composition for electrode insulating coating is high at a level of 2,500 cps or more, more particularly at a level of 3,000 cps to 8,500 cps, thereby increasing the thickness of the coating film when the composition for electrode insulating coating is applied. In addition, as the coating film thickness of the composition for electrode insulating coating is increased, the effect of reducing the sliding of the slurry for electrode is excellent.

Hereinafter, each composition of the composition for an electrode insulating coating according to the present disclosure will be described.

**(1) Inorganic particles**

The electrode insulating coating composition according to one embodiment of the present disclosure may include inorganic particles to increase electrical insulating properties and thermal stability, and to improve the strength of the insulating layer. Since the inorganic particles do not soften or melt even at high temperatures, e.g., 900°C or higher, when the electrode insulating layer includes such inorganic particles, the electrode insulating properties can be maintained even at very high temperatures.

The inorganic particles are one type or two or more types of compounds selected from the group consisting of $AlO(OH)$, $Al_2O_3$, $\gamma$-$AlOOH$, $Al(OH)_3$, $SiO_2$, $TiO_2$, $SnO_2$, $CeO_2$, $MgO$, $NiO$, $CaO$, $ZnO$, $ZrO_2$, $Y_2O_3$, $SrTiO_3$, $BaTiO_3$, and $Mg(OH)_2$, preferably may be one or more selected from the group consisting of $AlO(OH)$, $Al_2O_3$, $\gamma$-$AlOOH$ and $Al(OH)_3$, and more preferably may be $AlO(OH)$.

The $AlO(OH)$ (boehmite), since it contains hydroxy groups, has the advantage of excellent adhesion to the current collector after impregnation of an electrolyte, compared to the use of other inorganic particles (e.g., alumina).

According to one embodiment of the present disclosure, the average particle diameter $D_{50}$ of the inorganic particles before dissolution in the solvent may be from $0.1\ \mu m$ to $2\ \mu m$, preferably from $0.3\ \mu m$ to $1.7\ \mu m$, more preferably from $0.5\ \mu m$ to $1.4\ \mu m$. When the $D_{50}$ of the inorganic particles before dissolution satisfies the above range, the occurrence of agglomeration of the inorganic particles in the composition is minimized, thereby an insulating coating layer having a uniform thickness and surface can be formed.

The inorganic particles may be included from 51 parts by weight to 85 parts by weight, preferably from 53 parts by weight to 83 parts by weight, more preferably from 55 parts by weight to 80 parts by weight, with respect to 100 parts by weight of the solid content excluding the solvent. When the content of the inorganic particles satisfies the above range, the agglomeration of the inorganic particles can be minimized, thereby appropriately maintaining the viscosity of the composition for insulating coating, and an insulating coating layer having a uniform thickness and surface can be formed.

**(2) Rubber-based binder**

The electrode insulating coating composition according to one embodiment of the present disclosure may comprise a rubber-based binder to improve adhesion and flexibility of the insulating layer.

The rubber-based binder may be a mixture of one type or two or more types selected from the group consisting of styrene-butadiene rubber, styrene-butadiene latex, acrylate styrene-butadiene rubber, acrylonitrile-butadiene rubber, acrylonitrile-butadiene-styrene rubber, acrylic rubber, butyl rubber, and fluorine rubber, and may preferably be styrene-butadiene rubber (SBR) and/or styrene-butadiene latex. Styrene-butadiene rubber and styrene-butadiene latex have excellent wetting adhesion and excellent flexibility, and are thus preferred as rubber-based binders of the present disclosure.

The composition for electrode insulating coating according to the present disclosure, comprising styrene-butadiene rubber and/or styrene-butadiene latex as a rubber-based binder, has the effect of effectively preventing detachment of an insulating layer in an electrolyte.

The styrene-butadiene rubber and styrene-butadiene latex may contain, respectively, styrene monomer-derived repeating units and butadiene monomer-derived repeating units in a weight ratio of 70:30 to 30:70. In addition, the total weight of the styrene monomer-derived repeating units and butadiene monomer-derived repeating units may be from 30% to 100% or from 30 wt.% to 70 wt.%, with respect to the overall weight of the styrene-butadiene-based rubber.

Examples of the styrene monomer include styrene, $\alpha$-methylstyrene, p-methylstyrene, 3-methylstyrene, 4-methylstyrene, 4-propylstyrene, 1-vinylnaphthalene, 4-cyclohexylstyrene, 4-(p-methylphenyl)styrene, 1-vinyl-5-hexylnaphthalene, derivatives thereof, and mixtures thereof, and examples of the butadiene monomer include 1,3-butadiene, isoprene, 2,3-dimethyl-1,3-butadiene, 2-ethyl-1,3-butadiene, derivatives thereof, and mixtures thereof.

If necessary, the styrene-butadiene rubber may further contain a monomer repeating unit having a crosslinking group. The monomer-derived repeating unit having the crosslinking group may be contained in an amount of 12 parts by weight or less with respect to the total weight of the styrene-butadiene rubber to reduce electrolyte absorption.

The rubber-based binder may be included with respect to 100 parts by weight of the solid content excluding the solvent, from 15 parts by weight to 37 parts by weight, preferably from 18 parts by weight to 36 parts by weight, more preferably from 20 parts by weight to 35 parts by weight. When the content of the rubber-based binder satisfies the above range, adhesion and flexibility can be appropriately maintained, and an insulating layer having a uniform thickness and surface can be formed.

In addition, the rubber-based binder may be included in 65 parts by weight or less, preferably from 20 parts by weight to 63.5 parts by weight, more preferably from 25 parts by weight to 61 parts by weight, with respect to 100 parts by weight of the inorganic particles. When the rubber-based binder and the inorganic particles are satisfied in the above weight ratio, it is easy to properly control the solid content and viscosity of the composition for insulating coating.

### (3) Fluorine-based binder

The composition for electrode insulating coating according to one embodiment of the present disclosure includes a fluorine-based binder in addition to the rubber-based binder, in order to increase the coating thickness of the composition for insulating coating and decrease the coating width length. Conventionally, it has been common to include only a rubber-based binder, or only a fluorine-based binder, as a binder included in a composition for electrode insulating coating, but the electrode insulating coating composition according to the present disclosure is characterized in that it mainly includes a rubber-based binder, but includes a fluorine-based binder in a small amount.

The fluorine-based binder may comprise a PVDF-based polymer comprising vinylidene fluoride (VDF) as a monomer. Specific examples of the PVDF-based polymer include a PVDF homopolymer, PVDF-HFP (Poly(vinylidene fluoride-co-hexafluoropropylene)), PVDF-CTFE (Poly(vinylidene fluoride-co-chlorotrifluoroethylene)), PVDF-TFE (Poly(vinylidene tetrafluoroethylene)), PVDF-TrFE (Poly(vinylidene trifluoroethylene)), and the like.

According to an embodiment of the present disclosure, the weight average molecular weight (Mw) of the fluorine-based binder may be 800,000 g/mol or more, preferably 850,000 g/mol to 2,000,000 g/mol, more preferably 900,000 g/mol to 1,500,000 g/mol. When the weight average molecular weight of the fluorine-based binder satisfies the above range, the effect of increasing the coating thickness of the composition for insulating coating is excellent, and the electrode sliding length can be substantially reduced.

The fluorine-based binder may be included in 7 parts by weight or less, preferably 2 parts by weight to 6 parts by weight, more preferably 3 parts by weight to 5.5 parts by weight, with respect to 100 parts by weight of the solid content excluding the solvent. When the content of the fluorine-based binder satisfies the above range, it can have an appropriate viscosity range so that the coating stability of the composition for insulating coating can be excellent while the sliding length reduction effect can be maximized. If the fluorine-based binder is included in excess of 7 parts by weight with respect to 100 parts by weight of the solid content, the viscosity of the insulating coating composition may be higher than the viscosity of the electrode slurry, which is not desirable.

In one embodiment, the total weight of the rubber-based binder and the fluorine-based binder, based on the total weight of the solid content, is in the range of 20 wt.% to 45 wt.%, preferably 22 wt.% to 35 wt.%, more preferably 25 wt.% to 35 wt.%. When the total content of the rubber-based binder and the fluorine-based binder is in the above numerical range, the coating performance of the composition for insulating coating is excellent, while the effect of suppressing the sliding of the slurry for electrode is excellent.

### (4) Dispersant

The electrode insulating coating composition according to one embodiment of the present disclosure may include a dispersant to improve the dispersibility of the inorganic particles.

The dispersant may be one or more types selected from the group consisting of tannic acid, baicalin, luteolin, taxifolin, myricetin, quercetin, rutin, catechin, epigallocatechin gallate, butein and piceatannol, and preferably, the dispersant may be one or more types selected from the group consisting of tannic acid, quercetin, and epigallocatechin gallate, and more preferably, the dispersant may be tannic acid.

It has been found that the dispersant significantly improves the dispersibility of the inorganic particles, especially boehmite particles, and significantly improves the viscosity and temporal variation properties of the composition for electrode insulating coating. In particular, when the dispersant is tannic acid, the tannic acid can form a coordination bond with the current collector, making the composition for electrode insulating coating better attach to the current collector, and the hydroxy groups of the tannic acid can improve the flexibility of the rubber-based binder, styrene-butadiene rubber (SBR), which can assist in improving the adhesion of the composition for electrode insulating coating, ultimately further increasing the effectiveness of the composition for electrode insulating coating to suppress sliding of the electrode slurry.

The dispersant may be included in 0.3 parts by weight to 5 parts by weight, preferably 0.5 parts by weight to 4 parts by weight, more preferably 1 part by weight to 3 parts by weight, with respect to 100 parts by weight of the solid content excluding the solvent. When the content of the dispersant satisfies the above range, the coating properties of the composition for insulating coating and the adhesion with the electrode can be properly maintained.

**(5) Solvent**

The composition for electrode insulating coating according to one embodiment of the present disclosure includes a solvent for dispersing the inorganic particles, binders, and the like. It is preferred to use the solvent which is capable of dispersing the inorganic particles, dispersants and binders to a certain level or more, but which has non-solvent properties with respect to the electrode active material layer.

Specific examples of the solvent may be one type or two or more types selected from the group consisting of acetone, tetrahydrofuran, acetonitrile, dimethylformamide, dimethylsulfoxide, dimethylacetamide and N-methyl-2-pyrrolidone (NMP). These solvents, as non-aqueous solvents, are preferable in terms of phase stability compared to aqueous solvents.

The solvent may be included in a content such that the composition has an appropriate viscosity considering the coating properties of the composition, for example, with respect to 100 parts by weight of the composition, 85 parts by weight or less, preferably 71 parts by weight to 81 parts by weight, more preferably 73 parts by weight to 79 parts by weight.

The composition for electrode insulating coating according to the present disclosure may have a solid content excluding solvent of 16 wt.% or more, preferably from 18 wt.% to 30 wt.%, more preferably from 20 wt.% to 27 wt.%. When the solid content satisfies the above range, the composition can have a viscosity of a degree appropriate for forming an insulating layer using the composition, so that the coating performance is excellent, and the coating thickness of the insulating layer can be increased. To increase the wet-thickness, a higher solid content is advantageous.

The composition for electrode insulating coating according to the present disclosure may be prepared by inserting and mixing the inorganic particles, rubber-based binder, fluorine-based binder; and dispersant in the solvent, and then performing a dispersion process.

First, each composition of the composition is mixed by adding the inorganic particles, rubber-based binder, fluorine-based binder, and dispersant to the solvent and mixing. The mixing may be performed using mixing devices well known in the art, such as a homo mixer, for example, but not limited thereto.

Then, the composition obtained after the mixing process can be dispersed by milling. The milling may be performed using a ball mill, a bead mill, or a basket mill, and more specifically, may be performed using a bead mill.

Meanwhile, by adjusting the milling conditions, such as the number of times the composition is passed through the ball mill, bead mill or basket mill, the rotor speed, etc., the degree of dispersion of the composition can be controlled.

The composition for electrode insulating coating of the present disclosure as described above may have a viscosity of the composition measured at a shear rate of 2.5/s at 25°C, preferably from 2500 cps or more, more preferably from 3000 cps to 8500 cps, more preferably from 3500 cps to 8000 cps, and most preferably from 5000 cps to 7500 cps. The above viscosity range is higher than the viscosity range of the prior art composition for electrode insulating coating, which is 1000 cps to 2000 cps. When the viscosity of the composition for electrode insulating coating satisfies the above range, when the composition for electrode insulating coating is applied, the wet thickness level can be increased to the coating thickness level of the slurry for electrode, which can effectively serve as a dam to suppress the sliding of the slurry for electrode, and the coating stability of the composition for insulating coating is excellent.

The composition for electrode insulating coating according to the present disclosure, having the above viscosity range, may have a wet thickness of 100 μm or more, preferably 120 μm to 200 μm, and more preferably 130 μm to 180 μm. Here, the wet thickness means the maximum height from the surface of the current collector to the surface of the composition for electrode insulating coating, when the slurry for electrode and the composition for electrode insulating coating are coated together. The numerical range of the wet thickness is much higher than the numerical range of the wet thickness of the conventional composition for electrode insulating coating, such that the wet thickness of the composition for electrode insulating coating, which serves as a dam, is large enough to be similar to the thickness level of the slurry for electrode, thereby having a large effect of suppressing the sliding phenomenon of the slurry for electrode flowing down.

The composition for electrode insulating coating according to exemplary embodiments may have a phase angle a at 1 Hz, before shear, in the range of 1° to 9°, more specifically 2° to 8°, more specifically 3° to 7°. The composition for electrode insulating coating may have a phase angle b at 1 Hz, after shear, in a range of 2° to 10°, more particularly 3° to 9°, more particularly 4° to 8°. Here, the shear rate of the shear may be in the range of 0.001/s to 1,000/s. When the respective phase angle before and after shear of the composition for electrode insulating coating is in the above range, the effect of reducing the sliding length of the electrode slurry is excellent while having excellent coating properties.

The phase angle is a parameter that can evaluate the viscoelastic properties of the composition for insulating coating, and can be calculated according to the following formula 2.

[Formula 2]

$$\delta = \tan^{-1}(G''/G')$$

In the above Formula 2, $\delta$ is a phase angle (°), G' is a storage modulus value measured at a temperature of 25°C, and G" is a loss modulus value measured at a temperature of 25°C.

The storage modulus value (G'), loss modulus value (G"), phase angle, etc. can be measured and calculated by a concentric cylinder (CC) rheometer measurement method. Specifically, a predetermined amount of the composition for insulating coating may be placed in a cup, the gap between the cup and the rod may be adjusted to 4,000 $\mu$m, and the rheology may be measured under a constant temperature condition of 25°C. At this time, shear is applied for 900 seconds in the above shear rate range, and an oscillation test is performed before/after shear, and as a result, the phase angle can be measured.

The phase angle is a measure of whether a composition is closer to a liquid or a solid. A smaller value of the phase angle indicates that the composition has the properties of a solid, and a larger value of the phase angle indicates that the composition has the properties of a liquid.

The composition for electrode insulating coating according to exemplary embodiments may have a value of the phase angle change rate calculated according to the following Formula 1 in the range of 20% or less, more specifically in the range of 1% to 18%, more specifically in the range of 3% to 16%, more specifically in the range of 5% to 15%.

Phase angle change rate (%) = {(phase angle at 1 Hz after shear - phase angle at 1 Hz before shear)/ phase angle at 1 Hz before shear} $\times$ 100     [Formula 1]

In formula 1 above, the shear rate of the shear is in the range of 0.001/s to 1,000/s.

The method for calculating the change rate of the phase angle in the present specification is as described below. First, the phase angle caused by applying a frequency of 1 Hz to the composition for insulating coating is measured. This is called the phase angle before shear. Then, the composition for insulating coating is applied to shear with an increasing shear rate in the range of 0.001/s to 1,000/s. Then, after shear, the phase angle generated by applying a frequency of 1 Hz to the composition for insulating coating is measured. This is called the phase angle after shear. Then, the phase angle change rate is calculated by substituting this into the above formula 1.

Generally, the electrode slurry or the composition for insulating coating undergoes a coating process using a slit die coater, and the composition for insulating coating discharged from the slit of the slit die coater is subjected to shear force by discharge pressure. In the composition for insulating coating, when the change rate of the phase angle before and after shear is small, it means that the change rate of the phase by the discharge pressure is small, or the tendency to maintain the original phase is large. The composition for insulating coating in which the value of the phase angle change rate satisfies the above range has a large tendency to maintain the original phase even under discharge pressure, and thus has a strong supporting force for the electrode slurry, and thus has a large effect of suppressing the sliding phenomenon of the electrode slurry.

The composition for electrode insulating coating according to the present disclosure has an increased viscosity compared to the conventional composition for electrode insulating coating, which can increase the wet thickness, thereby reducing the sliding length of the slurry for electrode to a level of 2.5 mm or less, more particularly 0.1 mm to 2 mm, and more particularly 0.5 mm to 1.8 mm. Considering that the sliding length is at the level of 5 mm when the electrode is manufactured using a conventional composition for insulating coating, the composition for insulating coating according to the present disclosure can be evaluated as significantly reducing the sliding length.

As described above, the composition for electrode insulating coating according to the present disclosure has the effect of suppressing the sliding phenomenon of the slurry for electrode having an appropriate viscosity and solid content, thereby significantly reducing the sliding length. In addition, the composition for electrode insulating coating according to the present disclosure has excellent wetting adhesion compared to a composition for insulating coating that includes only a fluorine-based binder as a binder, which prevents detachment of the insulating layer, thereby improving the safety of the battery.

## Electrode manufacturing method

Hereinafter, the electrode manufacturing method according to the present disclosure will be described.

The electrode manufacturing method according to one embodiment of the present disclosure may include: a process of coating an electrode slurry on a current collector; and a process of coating a composition for electrode insulating coating on the current collector.

The electrode manufacturing method according to one embodiment of the present disclosure, in order to control a sliding length of the electrode active material layer to be short, wherein the composition for electrode insulating coating includes inorganic particles; a rubber-based binder; a fluorine-based binder; a dispersant; and a solvent, wherein the fluorine-based binder is included in an amount of 7 parts by weight or less with respect to 100 parts by weight of solid content excluding the solvent.

The composition of the composition for electrode insulating coating is described in detail above, and redundant description is omitted.

FIGS. 1 to 2 are drawings illustrating an electrode manufactured according to an electrode manufacturing process according to one embodiment of the present disclosure. Referring to FIG. 1, the composition for insulating coating 130CD may be coated on one side or both sides of the slurry for electrode 120SE based on the traverse direction (TD, Y direction) of the current collector 110. In addition, the composition for insulating coating 130CD is coated so as to overlap with a portion of the transverse direction (TD) end 120S of the slurry for electrode 120SE.

According to one embodiment of the present disclosure, the process of coating the composition for insulating coating may be performed simultaneously with the process of applying the slurry for electrode, or may be performed after applying the slurry for electrode, while the slurry for electrode is not dried.

Generally, when the slurry for electrode is coated on the current collector, the end of the applied slurry for electrode may be formed with an inclined surface, the so-called sliding portion. When the composition for insulating coating is applied at the same time as the slurry for electrode is applied, or when the composition for insulating coating is applied while the slurry for electrode is not dried, the sliding length can be reduced because the composition for insulating coating 130CD serves as a dam and suppresses the slurry for electrode 120SE from flowing down (refer to FIG. 1). Such reduction in sliding length is greater when the slurry for electrode and the composition for insulating coating is coated simultaneously.

**Electrode**

Hereinafter, the electrode according to the present disclosure will be described.

Referring to FIGS. 1 to 3, the electrode 100 according to one embodiment of the present disclosure includes an electrode current collector 110; an electrode active material layer 120 disposed on one side or both sides of the electrode current collector; and an insulating layer 130 disposed on one side or both sides of the electrode current collector, wherein the insulating layer 130 is structured to contact a traverse direction (TD, Y direction) end of the electrode active material layer 120. The end is an end of one side edge or both side edges of the electrode active material layer 120, based on the transverse direction (MD, Y direction) of the electrode sheet ES or the overall length direction (Y direction) of the electrode 100.

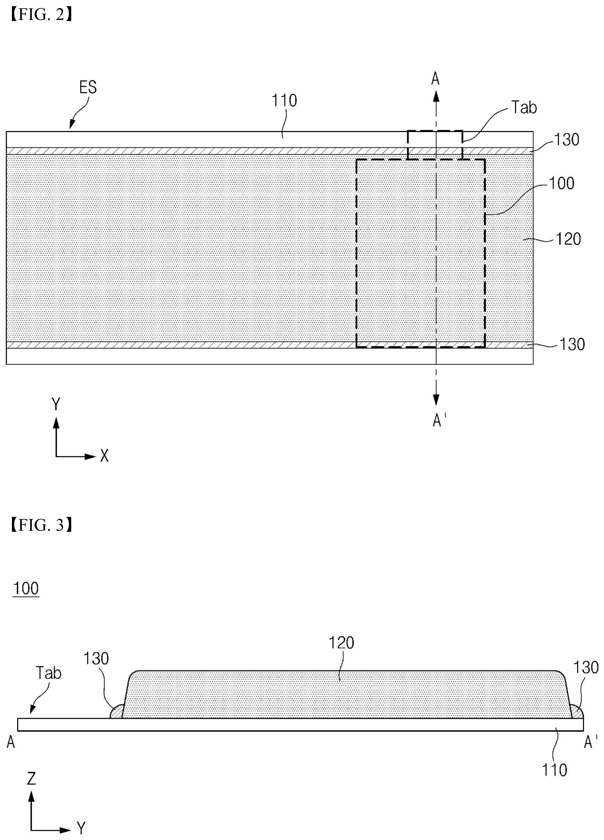

Referring to FIGS. 1 and 2, based on the traverse direction (Y direction) of the electrode sheet ES, which is the base material of the electrode 100, the electrode active material layer 120 is formed in the central part, and an insulating layer 130 is formed on both side edges of the electrode sheet ES, respectively, and an uncoated part not covered by the electrode active material layer 120 or the insulating layer 130 exists on the outside of the insulating layer 130. Further, by notching and cutting along the notching lines (dotted lines) marked on such an electrode sheet ES, the electrode 100 shown in FIG. 3 may be manufactured. Although FIG. 2 illustrates an electrode in which the insulating layer 130 is coated on both side edges of the electrode active material layer 120, the insulating layer 130 may be coated on only one side edge of the electrode active material layer 120.

Referring to FIGS. 1 and 3, the electrode active material layer 120 may be formed by drying the slurry for electrode 120SE applied on the current collector 110, and the insulating layer 130 may be formed by drying the composition for electrode insulating coating 130CD described above. The insulating layer 130 includes inorganic particles; a rubber-based binder; a fluorine-based binder; a dispersant; and a solvent, wherein the fluorine-based binder is included in 7 parts by weight or less with respect to 100 parts by weight of the solid content excluding the solvent. The inorganic particles, the rubber-based binder, the fluorine-based binder, and the dispersant comprising the insulating layer have been described in detail above, and thus redundant description will be omitted.

Referring to FIGS. 1 and 3, the electrode 100 according to one embodiment may be divided into a flattened region 120A in which the surface of the electrode active material layer 120 formed from the slurry for electrode 120SE is parallel to the plane of the current collector 110 and a sliding region 120S extending from the flattened region 120A but the surface thereof is inclined to the plane of the current collector 110. In addition, the sliding region 120S may be located at one end and the other end of the electrode active material layer 120 based on the overall length direction (Y-axis direction).

In the electrode 100 according to one embodiment, the composition for insulating coating 130CD prevents the slurry for electrode 120SE from spreading along the current collector, thereby the sliding length of the electrode active material layer 120 is short compared to a conventional electrode.

The composition for insulating coating according to the present disclosure, when applied on a current collector compared to a conventional composition for insulating coating, has an excellent effect of reducing the sliding length of the slurry for electrode because of a thicker wet thickness, so that the overall length direction length of the sliding region of the electrode active material layer can be reduced to a length of 2.5 mm or less, more specifically to a range of 0.1 mm to 2 mm, more specifically to a range of 0.5 mm to 1.8 mm. Here, the wet thickness means the thickness before the composition for insulating coating is applied and the drying step is performed.

Since the composition for insulating coating according to the present disclosure has the above composition, the wet thickness of the composition for insulating coating can be increased by having an appropriate viscosity and solid content in a range where the coating properties are not decreased, and as a result, the thickness of the insulating layer formed by drying the composition for insulating coating is also thicker compared to the insulating layer formed from the conventional composition for insulating coating.

The insulating layer has a maximum value of its thickness of 15 $\mu$m or more, more particularly from 17 $\mu$m to 40 $\mu$m, and more particularly from 20 $\mu$m to 35 $\mu$m. In addition, the insulating layer has a length in the overall length direction (Y-axis direction) thereof of 5 mm or less, preferably 4 mm or less, more preferably 3 mm or less. Here, the thickness of the insulating layer refers to the thickness after drying. Here, the thickness of the insulating layer refers to the thickness of only the insulating layer.

The current collector may be, but is not particularly limited to, one having conductivity without causing chemical changes in the battery. For example, copper, stainless steel, aluminum, nickel, titanium, calcined carbon, or aluminum or stainless steel whose surface is surface-treated with carbon, nickel, titanium, silver, or the like may be used as the current collector.

The electrode active material layer may be a positive electrode active material layer including a positive electrode active material or a negative electrode active material layer including a negative electrode active material.

As the positive electrode active material, without particular limitation, compounds known in the art as compounds capable of reversible intercalation and deintercalation of lithium may be used. Specifically, the positive electrode active material may include, but is not limited to: layered compounds such as lithium cobalt oxide ($LiCoO_2$), lithium nickel oxide ($LiNiO_2$), or compounds substituted with one or more transition metals; lithium manganese oxides such as $Li_{1+x}Mn_{2-x}O_4$ (where x is 0 to 0.33), $LiMnO_3$, $LiMn_2O_3$, $LiMnO_2$; lithium copper oxide ($Li_2CuO_2$); vanadium oxides such as $LiV_3O_8$, $LiV_3O_4$, $V_2O_5$, $Cu_2V_2O$; Ni site-type lithium nickel oxides represented by the formula $LiNi_{1-x}M_xO_2$ (where M = Co, Mn, Al, Cu, Fe, Mg, B or Ga, and x = 0.01 to 0.3); lithium manganese composite oxides represented by the formula $LiMn_{2-x}M_xO_2$ (where M = Co, Ni, Fe, Cr, Zn or Ta, and x = 0.01 to 0.1) or $Li_2Mn_3MO_8$ (where M = Fe, Co, Ni, Cu or Zn); spinel-structured lithium manganese composite oxides represented by $LiNi_xMn_{2-x}O_4$; $LiMn_2O_4$ where part of Li is substituted with alkaline earth metal ions; disulfide compounds; lithium iron phosphate represented by $LiFePO_4$; disulfide compounds; $Fe_2(MoO_4)_3$, and the like, but is not limited thereto.

The negative electrode active material is not particularly limited and may include: carbonaceous materials such as artificial graphite, natural graphite, graphitized carbon fiber, and amorphous carbon; metallic compounds capable of forming alloys with lithium such as Si, Al, Sn, Pb, Zn, Bi, In, Mg, Ga, TD, Si alloys, Sn alloys, or Al alloys; metal oxides capable of doping and de-doping lithium such as $SiO_x$ (where 0 < x < 2), $SnO_2$, vanadium oxides, and lithium vanadium oxides; or composites containing the above metallic compounds and carbonaceous materials such as Si-C composites or Sn-C composites, and the like, wherein any one or a mixture of two or more thereof may be used. A metallic lithium thin film may also be used as the negative electrode active material.

Meanwhile, the electrode active material layer may further include conductive materials and binders in addition to active materials such as positive electrode active material and negative electrode active material.

The conductive material is not particularly limited as long as it has conductivity without causing chemical changes in the battery, and may include, for example, graphite; carbon blacks such as carbon black, acetylene black, ketjen black, channel black, furnace black, lamp black, thermal black; conductive fibers such as carbon fiber and metal fiber; fluorinated carbon; metal powders such as aluminum, and nickel powder; conductive whiskers such as zinc oxide and potassium titanate; conductive metal oxides such as titanium oxide; conductive materials such as polyphenylene derivatives, and the like. Specific examples of commercially available conductive materials include acetylene black series such as products from Chevron Chemical Company, Denka Singapore Private Limited, Gulf Oil Company, and the like, Ketjenblack, EC series (products from Armak Company), Vulcan XC-72 (products from Cabot Company) and Super P (products from Timcal), and the like.

The binder is a component that assists in coupling active materials and conductive materials, and in coupling to the current collector, and is typically added in an amount of 1 wt.% to 30 wt.% based on the total weight of the mixture containing the positive electrode active material. Examples of such binders include polyvinylidene fluoride, polyvinyl alcohol, carboxymethyl cellulose (CMC), starch, hydroxypropyl cellulose, regenerated cellulose, polyvinylpyrrolidone, tetrafluoroethylene, polyethylene, polypropylene, ethylene-propylene-diene terpolymer (EPDM), sulfonated EPDM, styrene butadiene rubber, fluorinated rubber, various copolymers, and the like.

Hereinafter, the present disclosure will be described in more detail with reference to the Examples. However, the following Examples are for the purpose of illustrating the present disclosure and are not intended to limit the scope of the present disclosure.

**Example 1**

A composition for insulating coating was prepared by mixing boehmite (AlO(OH), product name: AOH60) as an inorganic particle, SBR (styrene butadiene rubber) (BM-L302, manufacturer: ZEON) as a rubber-based binder, PVDF (KF9700, manufacturer: Kureha, weight average molecular weight (Mw): $8.8\times10^5$ g/mol) as a fluorine-based binder, and tannic acid (TA, manufacturer: Sigma Aldrich) as a dispersant at a weight ratio of 74:22:2:2, and adding N-methylpyrrolidone (NMP) to obtain a solid content of about 25 wt.%.

**Example 2 to Example 3**

A composition for insulating coating was prepared in the same manner as in Example 1 above, except that the weight ratio of the inorganic particles, rubber-based binder, fluorine-based binder, and dispersant in Example 1 above were changed as shown in Table 1.

**Example 4**

A composition for insulating coating was prepared in the same manner as in Example 1 above, except that the weight ratio of the inorganic particles, rubber-based binder, fluorine-based binder and dispersant and the solid content in Example 1 above were changed as shown in Table 1.

**Comparative Example 1**

A composition for insulating coating was prepared by mixing boehmite (AlO(OH), product name: AOH60) as an inorganic particle, SBR (styrene butadiene rubber) (BM-L302, manufacturer: ZEON) as a rubber-based binder, and tannic acid (TA, manufacturer: Sigma Aldrich) as a dispersant at a weight ratio of 57.5:40:2.5, and adding N-methylpyrrolidone (NMP) to obtain a solid content of about 16.4 wt.%.

**Comparative Example 2**

A composition for insulating coating was prepared by mixing boehmite (AlO(OH), product name: AOH60) as an inorganic particle, SBR (styrene butadiene rubber) (BM-L302, manufacturer: ZEON) as a rubber-based binder, and tannic acid (TA, manufacturer: Sigma Aldrich) as a dispersant at a weight ratio of 76:22:2, and adding N-methylpyrrolidone (NMP) to obtain a solid content of about 25 wt.%.

**Comparative Example 3**

A composition for insulating coating was prepared by mixing boehmite (AlO(OH), product name: AOH60) as an inorganic particle, PVDF (KF9700, manufacturer: Kureha, weight average molecular weight (Mw): $8.8\times10^5$ g/mol) as a fluorine-based binder, and tannic acid (TA, manufacturer: Sigma Aldrich) as a dispersant at a weight ratio of 85:13.5:1.5, and adding N-methylpyrrolidone (NMP) to obtain a solid content of about 20 wt.%.

**Experimental example 1: Viscosity measurement**

The viscosity of the composition for insulating coating prepared in Examples 1 to 4 and Comparative Examples 1 to 3, respectively, was measured, and the results are shown in Table 1.
Specifically, the composition for insulating coating prepared in Examples 1 to 4 and Comparative Examples 1 to 3 above was cooled for 1 hour at room temperature and relative humidity of 1%, and then the viscosity of the composition for insulating coating was measured using a viscometer (Brookfield) at a shear rate of 2.5/s at 25°C. The viscosity measurements were performed within 2 hours after preparation of the composition for insulating coating including the cooling time.

**Experimental example 2: Measuring length of sliding region of electrode**

(Preparation of slurry for electrode)

A slurry for positive electrode was prepared by mixing lithium nickel cobalt manganese aluminum (NCMA) composite oxide (NCMA), a binder (PVDF, Poly(vinylidene fluoride)) (KF9700, manufactured by Kureha, weight average molecular weight (Mw): $8.8\times10^5$ g/mol), and a conductive material (carbon nanotube, CNT) at a weight ratio of 97:1.5:1.5 (NCMA:PVDF:CNT), and dispersing in N-methylpyrrolidone (NMP) to obtain a solid content of about 70 wt.%.

(Manufacturing of electrode)

The slurry for electrode and the insulating coating composition of Example 1 above were simultaneously coated on an aluminum metal foil (thickness: 10 μm), wherein the composition for insulating coating was coated on both side edges of the slurry for electrode coating portion based on the transverse direction (TD, Y-axis direction) of the metal foil. At this time, the coating thickness of each of the slurry for electrode and the composition for insulating coating were adjusted to be 150 μm.

Then, the electrode manufacturing was completed by drying and rolling at a temperature of 130°C.

The sliding length, which is the length in the transverse direction (Y-axis direction) of the sliding region of the electrode active material layer in the manufactured electrode, was measured and the results are shown in Table 1.

For the compositions for insulating coating of Examples 2 to 4 and Comparative Examples 1 to 3, the slurry for electrode and each electrode were also manufactured in the same manner as described above, and the sliding length of the electrode active material layer in each electrode was measured and the results are shown in Table 1.

[Table 1]

| | Composition for insulating coating (parts by weight) | | | | Solid content (wt.%) | Viscosity (cps) | Sliding length (mm) |
|---|---|---|---|---|---|---|---|
| | Bohemite | Tannic acid | PVD F | SBR | | | |
| **Example 1** | 74 | 2 | 2 | 22 | 25 | 2540 | 2.2 |
| **Example 2** | 71 | 2 | 5 | 22 | 25 | 6270 | 1.6 |
| **Example 3** | 71 | 2 | 3.5 | 23.5 | 25 | 5770 | 1.7 |
| **Example 4** | 57.5 | 2.5 | 5 | 35 | 16.4 | 3630 | 2 |
| **Compara tive Example 1** | 57.5 | 2.5 | 0 | 40 | 16.4 | 1050 | 2.9 |
| **Compara tive Example 2** | 76 | 2 | 0 | 22 | 25 | 2500 | 2.5 |
| **Compara tive Example 3** | 85 | 1.5 | 13.5 | 0 | 20 | 260 | 5.3 |

Referring to Table 1, it can be seen that the composition for insulating coating according to examples of the present disclosure has a reduced sliding length compared to the composition for insulating coating of Comparative Examples 1 to 3. In particular, the composition for insulating coating according to Example 2 to Example 3, in which the fluorine-based binder is included in 3.5 parts by weight to 5 parts by weight of the solid content, is found to have a higher viscosity and thus a better sliding length reduction effect.

Comparing Example 2 and Example 4, where the content of the fluorine-based binder is the same, it is found that the composition for insulating coating according to Example 2, which has a higher solid content, has a better effect of reducing the sliding length of the electrode slurry.

Since the composition for insulating coating according to Comparative Example 1 or Comparative Example 2 does not include a fluorine-based binder, the wet thickness is smaller than that of the composition for insulating coating of the Examples, and thus, compared to the composition for insulating coating of the Examples, the effect of reducing the sliding of the slurry for electrode is also smaller.

The composition for insulating coating according to Comparative Example 3, as it does not include a rubber-based binder, has a very low viscosity compared to the composition for insulating coating of the Examples, and is analyzed to have no effect of reducing the sliding length of the slurry for electrode.

**Claims**

1. A composition for electrode insulating coating, comprising:

   inorganic particles; a rubber-based binder; a fluorine-based binder; a dispersant; and a solvent, wherein the fluorine-based binder is included in an amount of 7 parts by weight or less with respect to 100 parts by weight of solid content excluding the solvent.

2. The composition for electrode insulating coating of claim 1, wherein the fluorine-based binder is included from 2 parts by weight to 6 parts by weight with respect to 100 parts by weight of solid content excluding the solvent.

3. The composition for electrode insulating coating of claim 1, wherein a viscosity of 2,500 cps or more, as measured at a shear rate of 2.5/s at 25°C.

4. The composition for electrode insulating coating of claim 1, wherein at 1 Hz, the phase angle a before shear is 1° to 9°, and the phase angle b after shear is 2° to 10°:
Here, the shear rate of the shear is in a range of 0.001/s to 1,000/s.

5. The composition for electrode insulating coating of claim 1, wherein the value of the phase angle change rate calculated according to the following formula 1 is 20% or less.

Phase angle change rate (%) = {(phase angle at 1 Hz after shear - phase angle at 1 Hz before shear)/phase angle at 1 Hz before shear} × 100     [Formula 1]

In formula 1 above, the shear rate of the shear is in the range of 0.001/s to 1,000/s.

6. The composition for electrode insulating coating of claim 1, wherein the fluorine-based binder is a PVDF-based polymer comprising vinylidene fluoride (VDF) as a monomer.

7. The composition for electrode insulating coating of claim 1, wherein the rubber-based binder is a styrene-butadiene rubber (SBR).

8. The composition for electrode insulating coating of claim 1, wherein the dispersant is one type or two or more types selected from the group consisting of tannic acid, baicalin, luteolin, taxifolin, myricetin, quercetin, rutin, catechin, epigallocatechin gallate, butein, and piceatannol.

9. The composition for electrode insulating coating of claim 1, wherein the dispersant is tannic acid.

10. The composition for electrode insulating coating of claim 1, wherein the inorganic particles are one type or two or more types selected from the group consisting of $AlO(OH)$, $Al_2O_3$, $\gamma$-$AlOOH$, $Al(OH)_3$, $SiO_2$, $TiO_2$, $SnO_2$, $CeO_2$, $MgO$, $NiO$, $CaO$, $ZnO$, $ZrO_2$, $Y_2O_3$, $SrTiO_3$, $BaTiO_3$, and $Mg(OH)_2$.

11. The composition for electrode insulating coating of claim 1, wherein with respect to 100 parts by weight of solid content excluding the solvent,

    the inorganic particles are included from 51 parts by weight to 85 parts by weight;
    the rubber-based binder is included from 15 parts by weight to 37 parts by weight; and
    the dispersant is included from 0.3 parts by weight to 5 parts by weight.

12. The composition for electrode insulating coating of claim 1, wherein the rubber-based binder is 65 parts by weight or less with respect to 100 parts by weight of the inorganic particles.

13. The composition for electrode insulating coating of claim 1, wherein solid content excluding the solvent is 16 wt.% or more.

14. The composition for electrode insulating coating of claim 1, wherein the total weight of the rubber-based binder and the fluorine-based binder, based on the total weight of solid content, is in the range of 20 wt.% to 45 wt.%.

15. The composition for electrode insulating coating of claim 1, wherein the solvent is one type or two or more types selected from the group consisting of acetone, tetrahydrofuran, acetonitrile, dimethylformamide, dimethylsulfoxide, dimethylacetamide, and N-Methyl-2-Pyrrolidone (NMP).

16. An electrode manufacturing method, comprising:

    a process of applying a slurry for electrode on a current collector; and
    a process of applying a composition for electrode insulating coating on the current collector,

wherein the composition for electrode insulating coating, comprising: inorganic particles; a rubber-based binder; a fluorine-based binder; a dispersant; and a solvent,
wherein the fluorine-based binder is included in an amount of 7 parts by weight or less with respect to 100 parts by weight of solid content excluding the solvent.

17. The electrode manufacturing method of claim 16, wherein in the process of coating the composition for insulating coating,
the composition for insulating coating is applied to one side edge or both side edges of the slurry for electrode, based on the transverse direction (TD) of the current collector, but is applied so as to overlap with a portion of the transverse direction end of the slurry for electrode.

18. The electrode manufacturing method of claim 16, wherein the process of coating the composition for insulating coating is performed simultaneously with the process of coating the slurry for electrode, or is performed after the application of the slurry for electrode, while the slurry for electrode is not dried.

19. An electrode, comprising:

an electrode current collector;
an electrode active material layer disposed on one side or both sides of the electrode current collector; and
an insulating layer disposed on one side or both sides of the electrode current collector,
wherein the insulating layer, contacting a transverse direction (TD) end of the electrode active material layer, comprising an inorganic particle; a rubber-based binder; a fluorine-based binder; and a dispersant,
wherein the fluorine-based binder comprises 7 parts by weight or less with respect to 100 parts by weight of the insulating layer.

20. The electrode of claim 19, wherein the electrode active material layer is divided into a flattened region, the surface of which is parallel to the plane of the current collector, and a sliding region extending from the flattened region, the surface of which is inclined to the plane of the current collector,
wherein the insulating layer contacts the inclined surface of the sliding region.

21. The electrode of claim 19, wherein the sliding region has an overall length direction length of 2.5 mm or less.

22. The electrode of claim 19, wherein the insulating layer has a maximum value of a thickness thereof of 15 $\mu$m or more, and
an overall length direction length thereof of 5 mm or less.

【FIG. 1】

100

12A

130CD(Dam,blocking)

120SE

110

120S

Z

Y

【FIG. 2】

【FIG. 3】

100

## INTERNATIONAL SEARCH REPORT

| International application No. |
| --- |
| **PCT/KR2024/015876** |

| A. | CLASSIFICATION OF SUBJECT MATTER |
| --- | --- |

**H01M 10/42**(2006.01)i; **H01M 4/13**(2010.01)i; **H01M 4/139**(2010.01)i; **H01M 4/62**(2006.01)i; **C09D 109/06**(2006.01)i; **C09D 7/61**(2018.01)i; **C09D 7/20**(2018.01)i; **C09D 7/45**(2018.01)i; **C08L 27/16**(2006.01)i; **C08K 3/22**(2006.01)i

According to International Patent Classification (IPC) or to both national classification and IPC

| B. | FIELDS SEARCHED |
| --- | --- |

Minimum documentation searched (classification system followed by classification symbols)

H01M 10/42(2006.01); C08K 3/22(2006.01); C08L 27/16(2006.01); H01M 50/586(2021.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 이차전지(secondary battery), 전극(electrode), 절연 코팅(insulating coating), 바인더(binder), 슬라이딩(sliding), 점도(viscosity)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| Y | KR 10-2023-0063150 A (LG ENERGY SOLUTION, LTD.) 09 May 2023 (2023-05-09)<br>See paragraphs [0033]-[0058] and [0160]-[0162], claims 1, 7-8 and 11 and figures 1-2. | 1-22 |
| Y | JP 2022-024869 A (TEIJIN LTD.) 09 February 2022 (2022-02-09)<br>See paragraphs [0041]-[0085]. | 1-22 |
| Y | KR 10-2023-0076111 A (LG ENERGY SOLUTION, LTD.) 31 May 2023 (2023-05-31)<br>See paragraphs [0049]-[0101] and figures 1-2. | 17-22 |
| A | KR 10-2023-0083808 A (LG ENERGY SOLUTION, LTD.) 12 June 2023 (2023-06-12)<br>See claims 1-6 and figure 1. | 1-22 |
| A | KR 10-2023-0010114 A (HYUNDAI MOTOR COMPANY et al.) 18 January 2023 (2023-01-18)<br>See paragraphs [0046]-[0052] and figure 1. | 1-22 |

| ☐ Further documents are listed in the continuation of Box C. | ☑ See patent family annex. |
| --- | --- |

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **20 January 2025** | **20 January 2025** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**EP 4 648 173 A1**

## INTERNATIONAL SEARCH REPORT
### Information on patent family members

| International application No. |
|---|
| **PCT/KR2024/015876** |

| Patent document cited in search report | | | Publication date (day/month/year) | Patent family member(s) | | | Publication date (day/month/year) |
|---|---|---|---|---|---|---|---|
| KR | 10-2023-0063150 | A | 09 May 2023 | CN | 117242618 | A | 15 December 2023 |
| | | | | EP | 4276970 | A1 | 15 November 2023 |
| | | | | JP | 2024-507332 | A | 19 February 2024 |
| | | | | KR | 10-2696063 | B1 | 19 August 2024 |
| | | | | US | 2024-0034891 | A1 | 01 February 2024 |
| | | | | WO | 2023-075551 | A1 | 04 May 2023 |
| JP | 2022-024869 | A | 09 February 2022 | CN | 116134089 | A | 16 May 2023 |
| | | | | EP | 4190860 | A1 | 07 June 2023 |
| | | | | JP | 2022-024868 | A | 09 February 2022 |
| | | | | JP | 2022-024870 | A | 09 February 2022 |
| | | | | JP | 7341957 | B2 | 11 September 2023 |
| | | | | JP | 7402766 | B2 | 21 December 2023 |
| | | | | JP | 7413180 | B2 | 15 January 2024 |
| | | | | KR | 10-2023-0028435 | A | 28 February 2023 |
| | | | | US | 2023-0282936 | A1 | 07 September 2023 |
| | | | | WO | 2022-025081 | A1 | 03 February 2022 |
| KR | 10-2023-0076111 | A | 31 May 2023 | CN | 116745966 | A | 12 September 2023 |
| | | | | EP | 4270593 | A1 | 01 November 2023 |
| | | | | JP | 2024-504177 | A | 30 January 2024 |
| | | | | US | 2024-0105954 | A1 | 28 March 2024 |
| | | | | WO | 2023-096322 | A1 | 01 June 2023 |
| KR | 10-2023-0083808 | A | 12 June 2023 | CN | 116745962 | A | 12 September 2023 |
| | | | | EP | 4273995 | A1 | 08 November 2023 |
| | | | | JP | 2024-503923 | A | 29 January 2024 |
| | | | | US | 2024-0128458 | A1 | 18 April 2024 |
| | | | | WO | 2023-101503 | A1 | 08 June 2023 |
| KR | 10-2023-0010114 | A | 18 January 2023 | | None | | |

Form PCT/ISA/210 (patent family annex) (July 2022)

**REFERENCES CITED IN THE DESCRIPTION**

**Patent documents cited in the description**

- KR 1020230139255
- KR 1020230012439